# EUROPEAN PATENT SPECIFICATION

(11) **EP 3 736 656 B1**
(45) Date of publication and mention of the grant of the patent: **28.12.2022**
(21) Application number: 18898931.3
(22) Date of filing: 04.10.2018
(51) Int. Cl.: G05G 5/03, B60K 20/02, G05G 5/05, G05G 1/04

(54) **OPERATION DEVICE**
BEDIENUNGSVORRICHTUNG
DISPOSITIF D'ACTIONNEMENT

(30) Priority: 05.01.2018 JP 2018000646
(43) Date of publication of application: 11.11.2020
(73) Proprietor: Alps Alpine Co., Ltd., Ota-ku Tokyo 145-8501 (JP)
(72) Inventor: FURUKI, Shigeru, Tokyo 145-8501 (JP)
(74) Representative: Maiwald GmbH
(86) International application number: PCT/JP2018/037227
(87) International publication number: WO 2019/135307

(56) References cited:
- EP-A2- 3 098 686
- JP-A- 2009 276 964
- JP-A- 2009 276 964

## Description

### [TECHNICAL FIELD]

The present invention relates to an operation device.

### [BACKGROUND ART]

Related art operation devices capable of generating operability of an operation lever are available. In such operation devices, an actuator disposed at a base portion of the operation lever is preloaded with a spring, and the actuator is then caused to contact a cam surface to generate the operability. Another operating device for holding an operating lever at a neutral position is disclosed in Patent Document 2. In no energization, first and second convex parts of a holding part are attracted to a magnet strongly by the disappearance of the first and second magnetic paths. An operating lever and a body of the holding part are moved relatively by the restoring force of a spring. Since a support mechanism part is fixed, the body is displaced downward. By the downward displacement of the body, the first convex part intrudes into a hollow region of a first coil, the second convex part intrudes into a hollow region of a second coil. The operating lever is held at the neutral position without being displaced to the E-position side by gravity since the holding part is held by the first and second coils. Still another operating device is disclosed in Patent Document 3. The operation device includes an operation member being able to make a tilting motion, a support body supporting the operation member, a plurality of movable magnetic bodies making the tilting motion, a counter magnetic body, and a plurality of stopper portions respectively corresponding to a plurality of positions at which the operation member is located. The counter magnetic body is fixed to one of the pair of movable magnetic bodies. When the operation member is at a reference position, the pair of movable magnetic bodies are closely arranged and attracted to each other.

### [RELATED ART DOCUMENT]

### [PATENT DOCUMENT]

[Patent Document 1] Japanese Unexamined Patent Application Publication No. 2002-144905
[Patent Document 2] Japanese Unexamined Patent Application Publication No. 2009-276964
[Patent Document 3] European Patent Application Publication No. 3 098 686

### [DISCLOSURE OF THE INVENTION]

### [PROBLEM TO BE SOLVED BY THE INVENTION]

However, in the related art operation devices, a lower portion of the operation lever needs to be long in order to hold the operation lever by the contact between the actuator and the cam surface, and thinning of the related art operation devices thus appears difficult.

The present invention has been made in light of the above-described problem, and it is an object of the present invention to achieve thinning of an operation device.

### [MEANS OF SOLVING THE PROBLEM]

An operation device according to claim 1.

### [ADVANTAGEOUS EFFECTS OF THE INVENTION]

According to embodiments of the present invention, it is possible to achieve thinning of an operation device.

### [BRIEF DESCRIPTION OF DRAWINGS]

FIG. 1 is an external perspective view illustrating an example of an operation device.
FIG. 2 is a perspective view illustrating an example of an internal configuration of an operation device when the operation device is not operated.
FIG. 3 is an exploded perspective view of FIG. 2.
FIG. 4 is a front view illustrating a part of the internal configuration of the operation device when the operation device is not operated.
FIG. 5 is a front view illustrating a part of the internal configuration of the operation device when the operation device is not operated.
FIG. 6A is a cross-sectional view taken along an A-A line of FIG. 2 according to a tilted state of the operation lever.
FIG. 6B is a cross-sectional view taken along the A-A line of FIG. 2 according to a tilted state of the operation lever.
FIG. 6C is a cross-sectional view taken along the A-A line of FIG. 2 according to a tilted state of the operation lever.
FIG. 7 is a perspective view illustrating an example of the internal configuration of the operation device.
FIG. 8A is a first modification of the operation device.
FIG. 8B is the first modification of the operation device.
FIG. 9A is a second modification of the operation device.
FIG. 9B is the second modification of the operation device.
FIG. 10A is a third modification of the operation device.
FIG. 10B is the third modification of the operation device.

### [MODE OF CARRYING OUT THE INVENTION]

The following illustrates embodiments of the present invention with reference to the accompanying drawings. In the description of the specification and the drawings related to each embodiment, constituent elements having substantially the same functions or configurations will be designated by the same reference numerals, to omit repeating descriptions thereof.

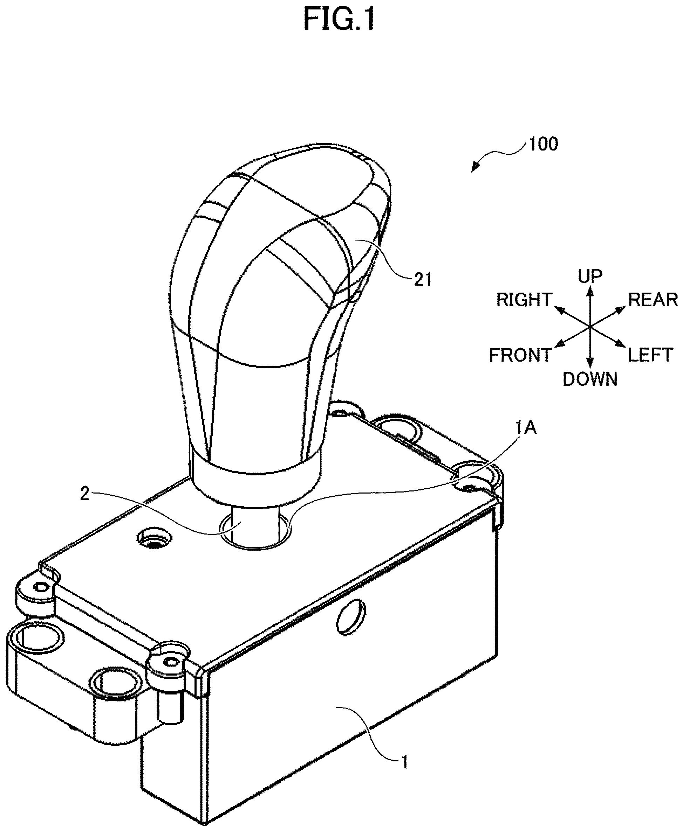

An operation device 100 according to an embodiment will be described with reference to FIGS. 1 to 10. The operation device 100 according to the present embodiment is a momentary type operation device. In the momentary type operation device, an operation lever is tiltable from an operation reference position (unoperated position) in a first direction. The operation lever, which has been tilted by a user in the first direction, is tilted in a direction opposite to the first direction, upon the user releasing the operation device from his/her hand, and then automatically returns to the operation reference position.

The following illustrates an example of the operation device 100, which is used as a shift device of a vehicle; however, the operation device 100 is not limited to this example. The operation device 100 may be provided in a railway vehicle, an aircraft, or a ship, or may be applied to a game controller.

FIG. 1 is a perspective view illustrating an example of the operation device 100. Hereinafter, the front, rear, left, right, up, and down illustrated in FIG. 1 will be described as frontward, rearward, leftward, rightward, upward and downward directions of the operation device 100 for convenience of illustration. However, the directions of the operation device 100 are not limited thereto.

The operation device 100 of FIG. 1 includes a housing 1 and an operation lever 2.

The housing 1 is a main body of the operation device 100 and internally houses a later described support member 3. The housing 1 is formed, for example, by injection molding a resinous material such as polybutylene terephthalate. A through hole 1A, through which the operation lever 2 is inserted, is provided on an upper surface of the housing 1. The through hole 1A is formed to be wider than a thickness of the operation lever 2 to allow the operation lever 2 to be tiltable.

The operation lever 2 is supported inside the housing 1 such that a base portion (a lower end portion) of the operation lever 2 is tiltable in the first direction from the operation reference position, and a tip portion (an upper end portion) of the operation lever 2 protrudes upward from the housing 1 through the through hole 1A. A knob 21, with which a user can tilt the operation lever 2, is attached to the tip portion of the operation lever 2. When the operation lever 2 is not operated, the operation lever 2 is positioned at the operation reference position. Hereinafter, the operation lever 2 configured to tilt in a rearward direction from the operation reference position is illustrated as an example. That is, the first direction is the rearward direction in the example noted below, but the first direction is not limited to the rearward direction.

The operation device 100 according to the present embodiment does not employ a machine control system in which the operation lever 2 is directly connected to a transmission, but employs a shift-by-wire system. Since the shift-by-wire type operation device 100 does not require a mechanical configuration such as a mechanical linkage, downsizing is achieved. Accordingly, it is possible to flexibly design a layout of the operation device 100 within a vehicle. Further, since the operation lever 2 can be operated with a relatively small force, operation of shift change can be simplified.

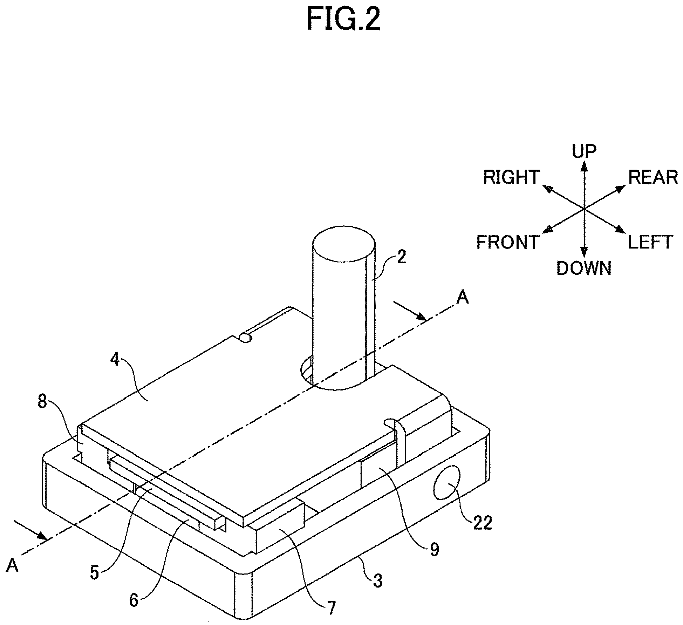

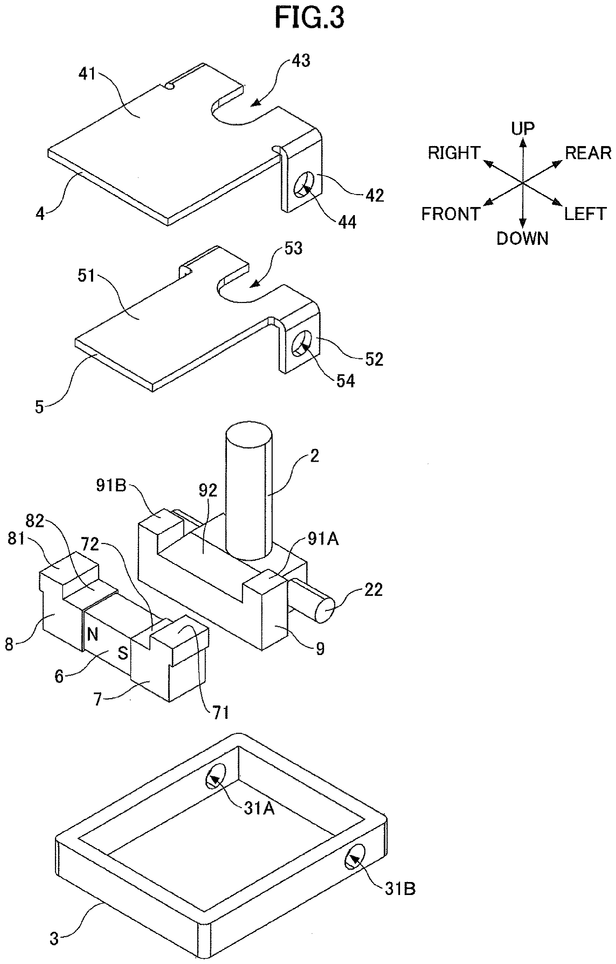

FIG. 2 is a perspective view illustrating an example of an internal configuration of the operation device 100 when the operation device 100 is not operated. FIG. 3 is an exploded perspective view of FIG. 2. As illustrated in FIGS. 2 and 3, the support member 3, a first movable member 4, a second movable member 5, a magnet 6, a first yoke 7, a second yoke 8, and a pressing member 9 are housed inside the housing 1.

The support member 3 is a member configured to support the operation lever 2 in a front-and-rear direction and is fixed to the housing 1. The support member 3 is a substantially rectangular frame having a left face and a right face extending in the front-and-rear direction, and a front face and a rear face extending in a left-and-right direction. Bearing portions (through holes) 31A and 31B are formed on the left face and the right face, respectively, at opposing positions.

As illustrated in FIG. 3, the base portion of the operation lever 2 is provided with a shaft portion 22 extending in a left-and-right direction. The support member 3 tiltably supports the operation lever 2 in a front-and-rear direction by the shaft portion 22 through the bearing portions 31A and 31B. The support member 3 is not limited to a frame but may have any shape capable of supporting the operation lever 2. Further, the housing 1 may serve as the support member 3.

The first movable member 4 is a plate-like member configured to tilt in conjunction with the operation lever 2 while the operation lever 2 is tilted in a first zone. The first movable member 4 is made of a magnetic body (a first magnetic body) such as iron. The first zone is a zone in which the operation lever 2 is tiltable rearward from the operation reference position. The first zone is described in detail later.

The first movable member 4 has a flat plate portion 41 and extending portions 42. The flat plate portion 41 is a substantially rectangular plate-like portion extending frontward from the base portion of the operation lever 2. A U-shape recess 43 is formed in the center of a rear end of the flat plate portion 41 (a portion corresponding to the operation lever 2) to avoid contact between the flat plate portion 41 and the operation lever 2. The extending portions 42 are plate-like portions extending downward from a left side and a left side of the rear end portion of the flat plate portion 41. The extending portions 42 are provided with respective through holes 44. Since the shaft portion 22 is inserted into the through holes 44, the first movable member 4 is configured to be tiltable in an up-and-down direction in conjunction with the operation lever 2.

A front end portion of the first movable member 4 (the flat plate portion 41) is, as illustrated in FIG. 2, attracted to later-described respective first attraction surfaces 71 and 81 of a first yoke 7 and a second yoke 8 by the magnetic force generated by the magnet 6 while the operation lever 2 is not operated.

The first movable member 4 may be provided with a magnetic body (a first magnetic body) such as iron only on a lower surface of the front end portion (a portion corresponding to the later-described first attraction surfaces 71 and 81) of the flat plate portion 41, and not on the entirety of the first movable member 4. In this case, the first movable member 4 may be formed by insertion molding in which a magnetic body (the first magnetic body) of a corresponding size is inserted into a non-magnetic body such as a thermoforming resin.

The second movable member 5 is a plate-like member configured to tilt in conjunction with the operation lever 2 while the operation lever 2 is tilted in a later described second zone. The second movable member 5 is made of a magnetic body (a second magnetic body) such as iron. The second zone is a part of a zone in which the operation lever 2 is tiltable, and is included in the first zone. The second zone is narrower than the first zone. Details of the second zone are described later.

The second movable member 5 has a flat plate portion 51 and extending portions 52. The flat plate portion 51 is a substantially rectangular plate-like portion that extends frontward from the base portion of the operation lever 2. A U-shape recess 53 is formed in the center of a rear end of the flat plate portion 51 (a portion corresponding to the operation lever 2) to avoid contact between the flat plate portion 51 and the operation lever 2. The extending portions 52 are plate-like portions extending downward from a left side and a left side of the rear end portion of the flat plate portion 51. The extending portions 52 are provided with respective through holes 54. Since the shaft portion 22 is inserted into the through holes 54, the second movable member 5 is configured to be tiltable in the up-and-down direction in conjunction with the operation lever 2.

A front end portion of the second movable member 5 (the flat plate portion 51) is, as illustrated in FIG. 2, attracted to later-described respective second attraction surfaces 72 and 82 of the first yoke 7 and the second yoke 8 by the magnetic force generated by the magnet 6 while the operation lever 2 is not operated.

The second movable member 5 is disposed beneath the first movable member 4. Hence, the extending portions 52 are disposed more inside than the extending portions 42. As a result, the length of the rear end portion of the flat plate portion 51 in the left-and-right direction (hereinafter, referred to as "width") is narrower than the width of the rear end portion of the flat plate portion 41. Either of the flat plate portions 41 and 51 are also formed such that the front end portions of the flat plate portions 41 and 51 at least partially face the upper surfaces of the first yoke 7 and the second yoke 8.

The second movable member 5 may be provided with a magnetic body (the second magnetic body) such as iron only on a lower surface of the front end portion (a portion corresponding to later-described second attraction surfaces 72 and 82) of the flat plate portion 51, and not on the entirety of the second movable member 5. In this case, the second movable member 5 may be formed by insertion molding in which a magnetic body (the second magnetic body) of a corresponding size is inserted into a non-magnetic body such as a thermoforming resin.

The magnet 6 is disposed such that magnetic poles (the N pole and the S pole) are aligned in a left-and-right direction (a direction perpendicular to a tilting direction of the operation lever 2) in front of the operation lever 2. The magnet 6 may be an electromagnet or a permanent magnet such as a neodymium magnet. The magnet 6 is disposed beneath the second movable member 5. That is, the second movable member 5 (the second magnetic body) is disposed between the first movable member 4 (the first magnetic body) and the magnet 6. Hereinafter, the magnet 6 is disposed such that the S pole (the first magnetic pole) is on the left side and the N pole (the second magnetic pole) is on the right side. However, the arrangement of the magnetic poles may be reversed.

The first yoke 7 is a block made of a magnetic body such as iron, and is fixed to the support member 3. The first yoke 7 may be fixed directly to the housing 1. The first yoke 7 is disposed on the left side of the magnet 6 so as to face the S pole. The first yoke 7 has a stepped shape with the left side protruding upward relative to the right side, and has a first attraction surface 71 and a second attraction surface 72. That is, the first yoke 7 has a stepped shape in which the first attraction surface 71 and the second attraction surface 72 are disposed at different positions in an up-and-down direction (a direction of attracting the first magnetic body and the second magnetic body), and the first attraction surface 71 and the second attraction surface 72 are disposed at different positions in a left-and-right direction (a direction perpendicular to the direction of attracting the first magnetic body and the second magnetic body). In one embodiment, the first attraction surface 71 is an upper surface on the left side of the first yoke 7, and is formed at a level higher than the second attraction surface 72. The second attraction surface 72 is an upper surface on the right side of the first yoke 7, and is formed at a level lower than the first attraction surface 71. The first yoke 7 is disposed such that at least a part of the front end portion of the first movable member 4 faces at least a part of the first attraction surface 71, and at least a part of the front end portion of the second movable member 5 faces at least a part of the second attraction surface 72.

The second yoke 8 is a block made of a magnetic body such as iron, and is fixed to the support member 3. The second yoke 8 may be fixed directly to the housing 1. The second yoke 8 is disposed on the right side of the magnet 6 so as to face the N pole. The second yoke 8 has a stepped shape with the right side thereof protruding upward from the left side, and has a first attraction surface 81 and a second attraction surface 82. That is, the second yoke 8 has a stepped shape in which the first attraction surface 81 and the second attraction surface 82 are disposed at different positions in the up-and-down direction (a direction of attracting the first magnetic body and the second magnetic body) and the first attraction surface 81 and the second attraction surface 82 are disposed at different positions in the left-and-right direction (a direction perpendicular to the direction of attracting the first magnetic body and the second magnetic body). In one embodiment, the first attraction surface 81 is an upper surface on the right side of the second yoke 8, and is formed at a level higher than the second attraction surface 82. The second attraction surface 82 is an upper surface on the left side of the second yoke 8, and is formed at a level lower than the first attraction surface 81. The second yoke 8 is disposed such that at least a part of the front end portion of the first movable member 4 faces at least a part of the first attraction surface 81, and at least a part of the front end portion of the second movable member 5 faces at least a part of the second attraction surface 82.

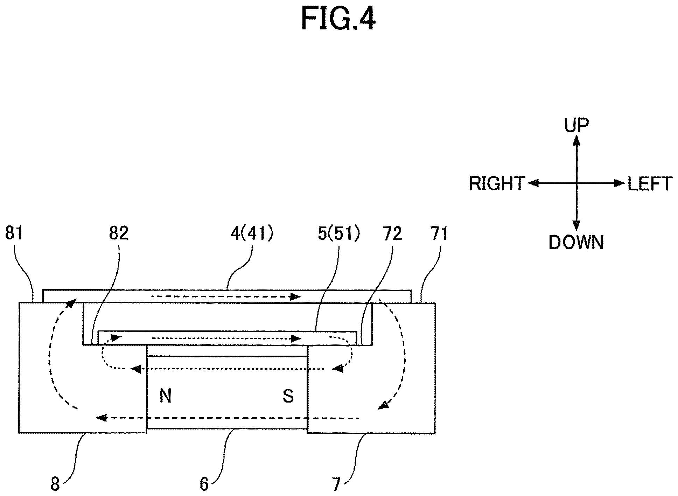

FIG. 4 is a front view illustrating a portion of an internal configuration of the operation device 100 when the operation is not performed. FIG. 4 illustrates a first movable member 4, a second movable member 5, a magnet 6, a first yoke 7, and a second yoke 8.

As illustrated in FIG. 4, the first yoke 7 and the second yoke 8 are disposed such that the first attraction surfaces 71 and 81 face the flat plate portion 41, and such that the first attraction surfaces 71 and 81 are included in the same plane. Hence, when the operation lever 2 is not operated, at least a part of the front end portion of the first movable member 4 contacts (faces) at least a part of each of the first attraction surfaces 71 and 81, which forms a magnetic path (indicated by broken-line arrows in FIG. 4) passing through the first movable member 4, the first yoke 7, the magnet 6, and the second yoke 8. As a result, the front end portion of the first movable member 4 is attracted to the first attraction surfaces 71 and 81 by the magnetic force generated by the magnet 6.

At least one of the upper surfaces of the first attraction surfaces 71 and 81 and the lower surface of the front end portion of the first movable member 4 may be provided with a cushioning member such as rubber, which reduces impact or noise upon the first movable member 4 being attracted to the first attraction surfaces 71 and 81. Even in this case, since at least a part of the front end portion of the first movable member 4 faces at least a part of each of the first attraction surfaces 71 and 81 with the cushioning member being interposed therebetween, the magnetic path of FIG. 4 is formed such that the first movable member 4 is attracted to the first attraction surfaces 71 and 81.

The first yoke 7 and the second yoke 8 are disposed such that the second attraction surfaces 72 and 82 face the flat plate portion 51, and such that the first attraction surfaces 71 and 81 are included in the same plane. Hence, when the operation lever 2 is not operated, at least a part of the front end portion of the second movable member 5 contacts (faces) at least a part of each of the second attraction surfaces 72 and 82, which forms a magnetic path (indicated by dotted-line arrows in FIG. 4) passing through the second movable member 5, the first yoke 7, the magnet 6, and the second yoke 8. As a result, the front end portion of the second movable member 5 is attracted to the second attraction surfaces 72 and 82 by the magnetic force generated by the magnet 6.

At least one of the upper surfaces of the second attraction surfaces 72 and 82 and the lower surface of the front end portion of the second movable member 5 may be provided with a cushioning member such as rubber, which reduces the impact and noise upon the second movable member 5 being attracted to the second attraction surfaces 72 and 82. Even in this case, since at least a part of the front end portion of the second movable member 5 faces at least a part of each of the second attraction surfaces 72 and 82 with the cushioning member being interposed therebetween, the magnetic path of FIG. 4 is formed such that the second movable member 5 is attracted to the second attraction surfaces 72 and 82.

The pressing member 9 is disposed on the front side of the base portion of the operation lever 2, such that the pressing member 9 is configured to tilt integrally with the operation lever 2. The pressing member 9 may be attached to the base portion of the operation lever 2 or may be formed integrally with the operation lever 2. The pressing member 9 has a stepped shape with a left end portion and a right end portion protruding upward from a central portion. The pressing member 9 has first pressing surfaces 91A and 91B, and a second pressing surface 92. The first pressing surfaces 91A and 91B are respective upper surfaces of the left end portion and the right end portion of the pressing member 9. The first pressing surfaces 91A and 91B are formed in the same plane at a level higher than the second pressing surface 92 (on the tip portion side of the operation lever 2). The second pressing surface 92 is an upper surface of a central portion of the pressing member 9, and is formed at a level lower than the first pressing surfaces 91A and 91B (on the base portion side of the operation lever 2). The second pressing surface 92 is formed so as to have an inclined surface downward (on the base portion side of the operation lever 2) from the operation lever 2 toward the magnet 6.

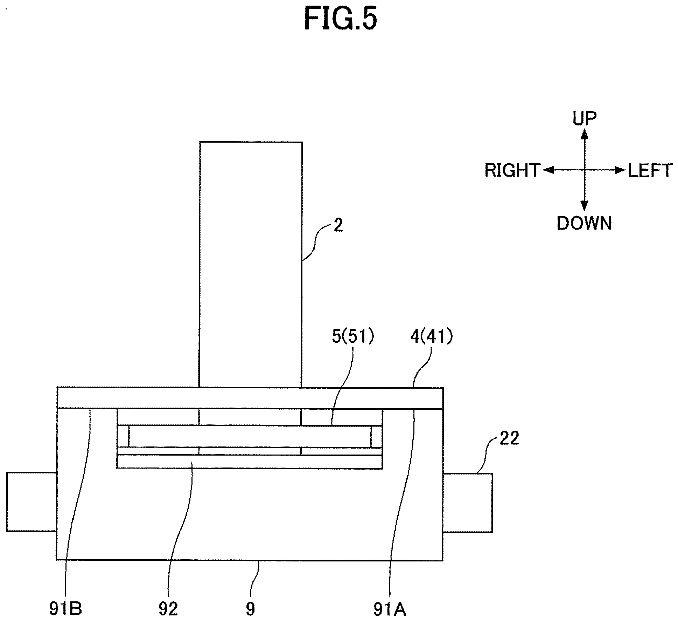

Herein, FIG. 5 is a front view illustrating a part of an internal configuration of the operation device 100 when the operation is not performed. FIG. 5 illustrates the operation lever 2, the first movable member 4, the second movable member 5, and the pressing member 9.

As illustrated in FIG. 5, the pressing member 9 is disposed such that the first pressing surfaces 91A and 91B face the rear end portion of the flat plate portion 41, and the second pressing surface 92 faces the rear end portion of the flat plate portion 51. As illustrated in the example of FIG. 5, it is preferable that the first pressing surfaces 91A and 91B are configured to contact the rear end portion of the flat plate portion 41. As can be seen in FIG. 5, since the second pressing surface 92 is inclined forward, the second pressing surface 92 is separated from the flat plate portion 51.

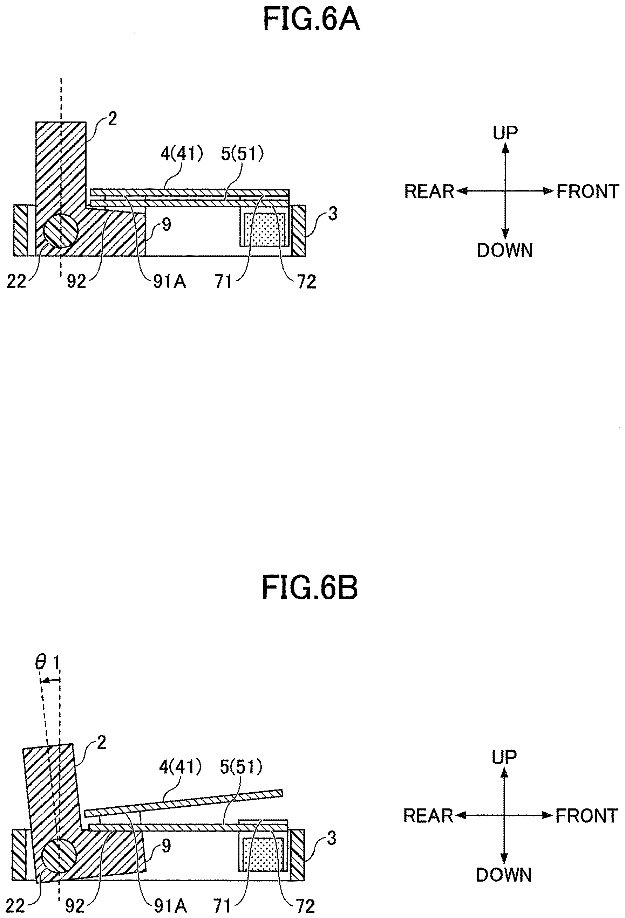

Next, an operation of the operation device 100 will be described. FIGS. 6A to 6C are each a cross-sectional view taken along an A-A line of FIG. 2 according to the tilted state of the operation lever 2.

FIG. 6A is a cross-sectional view illustrating a state when the operation lever 2 is not operated. The operation lever 2 is positioned at the operation reference position when the operation lever 2 is not operated. According to the example of FIG. 6A, the front end portion of the first movable member 4 is attracted to the first attraction surfaces 71 and 81, and the rear end portion of the first movable member 4 contacts the first pressing surfaces 91A and 91B. Likewise, the front end portion of the second movable member 5 is attracted to the second attraction surfaces 72 and 82, and the rear end portion of the second movable member 5 faces the second pressing surface 92.

When the operation lever 2 of FIG. 6A is tilted rearward, the pressing member 9 is tilted integrally with the operation lever 2, and the rear end portion of the first movable member 4 is pressed upward by the first pressing surfaces 91A and 91B. Accordingly, the first movable member 4 is tilted upward in conjunction with the operation lever 2, the front end portion of the flat plate portion 41 is separated from the first attraction surfaces 71 and 81, and the attraction force applied from the first attraction surfaces 71 and 81 to the front end portion of the flat plate portion 41 rapidly changes. The rapid change in the attraction force is perceived by a user as operability. That is, operability is generated upon the operation lever 2 of FIG. 6A being tilted rearward.

FIG. 6B is a cross-sectional view illustrating a state where the operation lever 2 is tilted by an angle θ1. The angle θ1 corresponds to an inclination angle of the second pressing surface 92 with respect to a plane perpendicular to the up-and-down direction. According to the example of FIG. 6B, the front end portion of the first movable member 4 is separated from the first attraction surfaces 71 and 81, and the rear end portion of the first movable member 4 is pressed by the first pressing surfaces 91A and 91B. Likewise, a front end portion of the second movable member 5 is attracted to the second attraction surfaces 72 and 82, and a rear end portion of the second movable member 5 contacts the second pressing surface 92.

When the operation lever 2 of FIG. 6B is tilted further rearward, the pressing member 9 is tilted integrally with the operation lever 2, and the rear end portion of the second movable member 5 is pressed upward by the second pressing surface 92. Accordingly, the second movable member 5 is tilted upward in conjunction with the operation lever 2, the front end portion of the flat plate portion 51 is separated from the second attraction surfaces 72 and 82, and the attraction force applied from the second attraction surfaces 72 and 82 to the front end portion of the flat plate portion 51 rapidly changes. The rapid change in the attraction force is perceived by a user as operability. That is, operability is generated upon the operation lever 2 of FIG. 6B being tilted rearward.

Upon a user releasing the operation lever 2 of FIG. 6B from his/her hand, the front end portion of the flat plate portion 41 is attracted to the first attraction surfaces 71 and 81 such that the first movable member 4 is tilted downward. This causes the operation lever 2 to tilt frontward in conjunction with the first movable member 4 and return to the operation reference position illustrated in FIG. 6A.

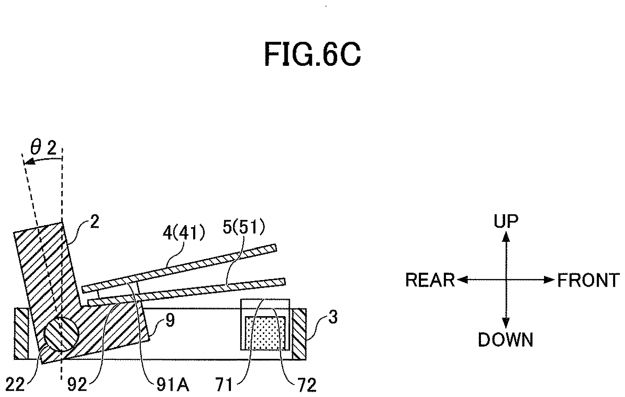

FIG. 6C is a cross-sectional view illustrating a state where the operation lever 2 is tilted by an angle θ2. The angle θ2 corresponds to the maximum angle by which the operation lever 2 is tiltable. According to the example of FIG. 6C, the angle θ2 of the operation lever 2 is defined by bringing the operation lever 2 into contact with the rear face of the support member 3; however, a stopper member may be disposed in addition to the support member 3 in order to define the angle θ2. In the example of FIG. 6C, the first movable member 4 has a front end portion that is separated from the first attraction surfaces 71 and 81, and a rear end portion that is pressed by the first pressing surfaces 91A and 91B. The second movable member 5 has a front end portion that is separated from the second attraction surfaces 72 and 82, and a rear end portion that is pressed by the second pressing surface 92.

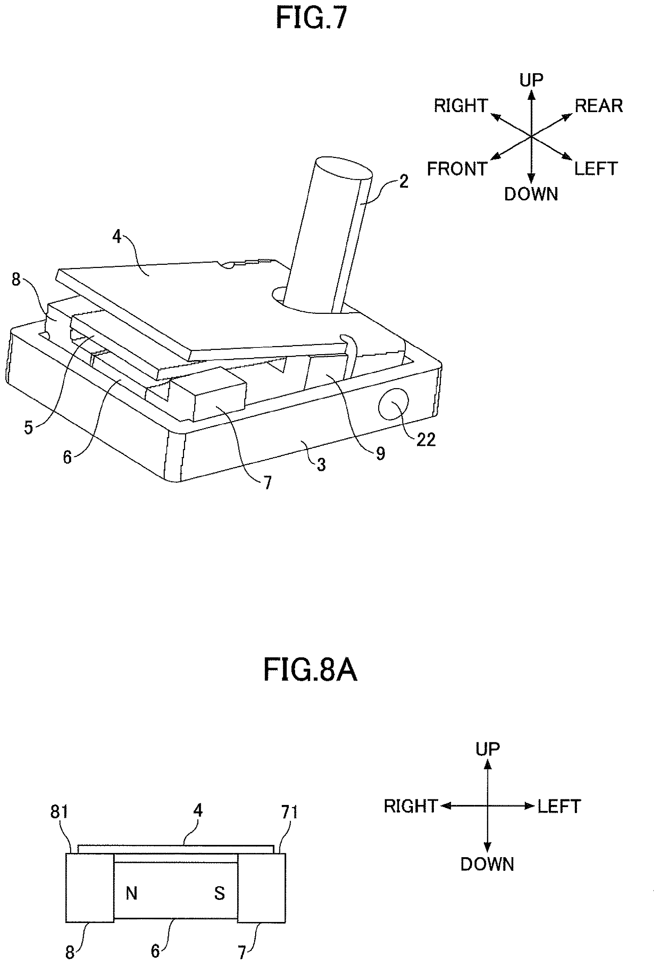

FIG. 7 is a perspective view illustrating an example of an internal configuration of the operation device 100 in the state of FIG. 6C. As can be clear from FIG. 7, in the state of FIG. 6C, the front end portion of the first movable member 4 is separated from the first attraction surfaces 71 and 81, and the front end portion of the second movable member 5 is separated from the second attraction surfaces 72 and 82.

Upon a user releasing the operation lever 2 of FIG. 6C from his/her hand, the front end portion of the flat plate portion 51 is attracted to the second attraction surfaces 72 and 82, and the second movable member 5 is tilted downward. This causes the operation lever 2 to tilt frontward in conjunction with the second movable member 5 and return to a position at the angle θ1 illustrated in FIG. 6B. Subsequently, the front end portion of the flat plate portion 41 is attracted to the first attraction surfaces 71 and 81, and the first movable member 4 is tilted downward. This causes the operation lever 2 to tilt frontward in conjunction with the first movable member 4 and return to the operation reference position illustrated in FIG. 6A.

As described above, the first movable member 4 is attracted to the first attraction surfaces 71 and 81 while the operation lever 2 is positioned at the operation reference position. The first movable member 4 is pressed by the first pressing surfaces 91A and 91B while the operation lever 2 is tilted in a zone from the operation reference position to a position at the angle θ2 (the first zone), such that the first movable member 4 is tilted in conjunction with the operation lever 2. Operability of the operation lever 2 is generated upon the first movable member 4 separating from the first attraction surfaces 71 and 81.

The second movable member 5 is attracted to the second attraction surfaces 72 and 82 while the operation lever 2 is tilted in a zone from the operation reference position to a position at the angle θ1 (a zone outside a later described second zone). The second movable member 5 is pressed by the second pressing surface 92 while the operation lever 2 is tilted in a zone from a position at the angle θ1 to a position at the angle θ2 (the second zone), such that the second movable member 5 is tilted in conjunction with the operation lever 2. Operability of the operation lever 2 is generated upon the second movable member 5 separating from the second attraction surfaces 72 and 82.

As described above, according to the present embodiment, the momentary type operation device 100 can be provided without having an actuator disposed at the base portion of the operation lever 2, where the operation device 100 is capable of generating operability, and capable of two-step tilting rearward from the operation reference position (the first direction). Accordingly, thinning of the operation device 100 can be achieved.

According to the present embodiment, the operability can be provided by a simple structure composed of a magnet 6, a first yoke 7, and a second yoke 8. The strength of the operability can be easily adjusted by adjusting the magnetic strength of the magnet 6 and the shapes (shapes of the magnetic path) of the first yoke 7 and the second yoke 8. As a result, the operation device 100 exhibiting a small variability in the intensity of the operability can be easily produced.

The configuration of the operation device 100 according to the present embodiment is not limited to the above-described examples. Hereinafter, modifications of the operation device 100 will be described.

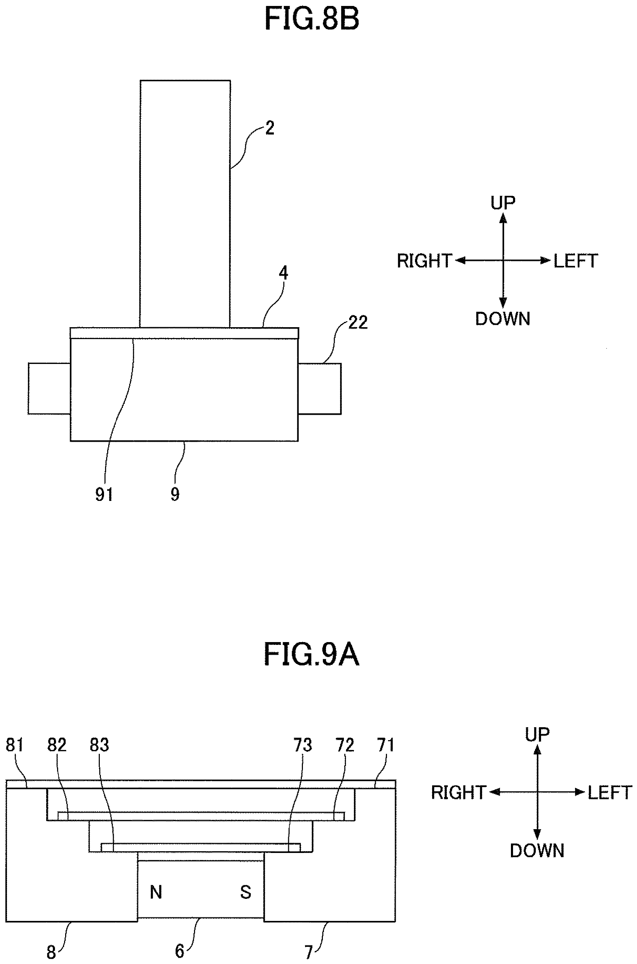

FIGS. 8A and 8B are views each illustrating a first modification of the operation device 100. FIGS. 8A and 8B are front views each illustrating a part of the internal configuration when the operation device 100 according to the first modification is not operated. In the examples of FIG. 8A and 8B, the operation device 100 includes a first movable member 4 and does not include a second movable member 5. The first yoke 7 and the second yoke 8 have a substantially rectangular shape, and have respective first attraction surfaces 71 and 81. The pressing member 9 has a substantially rectangular shape, and has a first pressing surface 91. With such a configuration, a momentary type operation device 100 capable of generating operability, and capable of one-step tilting rearward from the operation reference position can be provided.

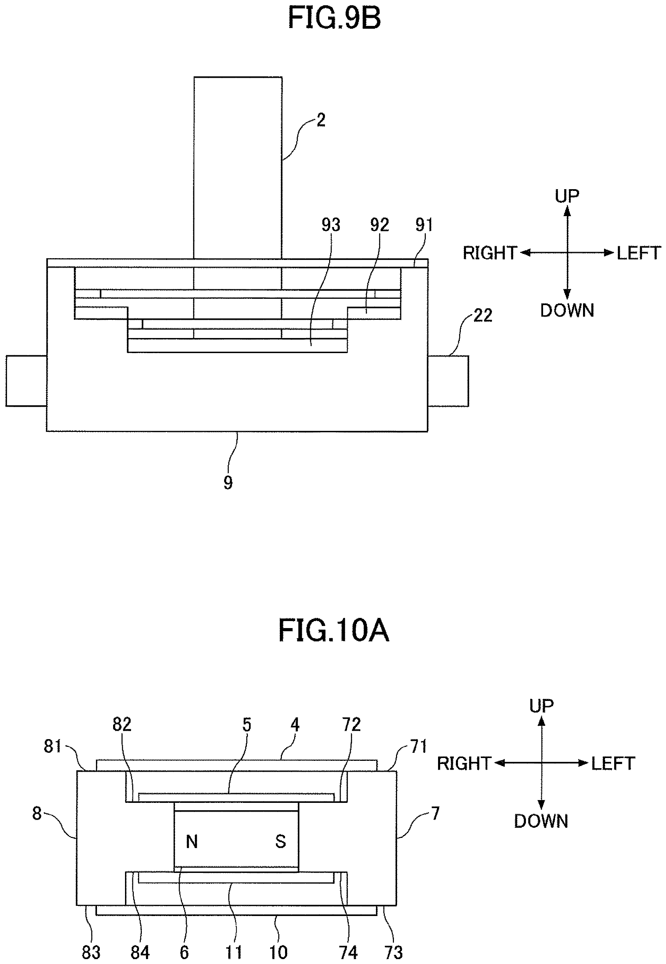

FIG. 9A and 9B are views each illustrating a second modification of the operation device 100. FIGS. 9A and 9B are front views each illustrating a part of an internal configuration when the operation device 100 according to the second modification is not operated. In the examples of FIGS. 9A and 9B, the operation device 100 includes three movable members. The first yoke 7 and the second yoke 8 have a stepped shape with three sets of attraction surfaces 71 and 81, 72 and 82, and 73 and 83 for attracting different movable members, and the pressing members 9 have three pressing surfaces 91, 92, and 93 for pressing different movable members. With such a configuration, a momentary type operation device 100 capable of generating operability, and capable of three-step tilting rearward from the operation reference position can be provided. In order to provide the momentary type operation device 100 capable of generating operability, and capable of N-step tilting rearward from the operation reference position, N (N ≥ 4) movable members may be disposed in the up-and-down direction, such that the first yoke 7, the second yoke 8, and the pressing member 9 may form an N-stepped shape.

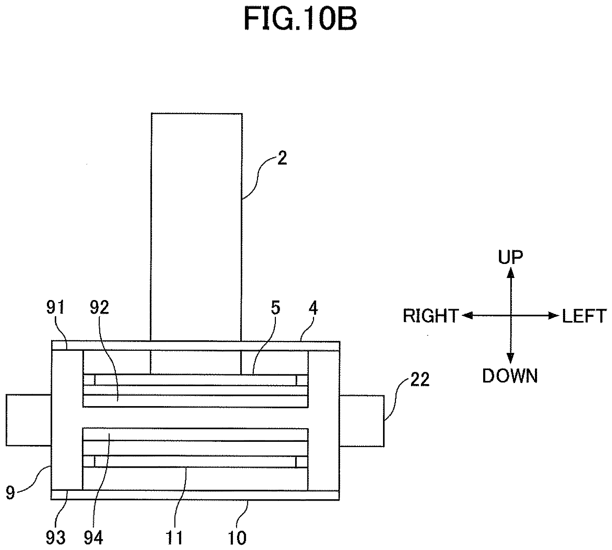

FIGS. 10A and 10B are views each illustrating a third modification of the operation device 100. FIGS. 10A and 10B are front views each illustrating a part of an internal configuration when the operation device 100 according to the third modification is not operated. As illustrated in the examples of FIGS. 10A and 10B, the operation device 100 includes a third movable member 10 and a fourth movable member 11.

The third movable member 10 is a plate-like member configured to tilt in conjunction with the operation lever 2 while the operation lever 2 is tilted in a third zone. The third movable member 10 is made of a magnetic body (a third magnetic body) such as iron. The third movable member 10 is disposed on a side opposite to the first movable member 4 with a magnet 6 being interposed therebetween. The third zone is a zone in which the operation lever 2 is tiltable frontward from the operation reference position. That is, the third zone is a zone opposite to the first zone with the operation reference position being interposed between the first zone and the third zone.

A front end portion of the third movable member 10 is, as illustrated in FIGS. 10A and 10B, attracted to later-described respective third attraction surfaces 73 and 83 of the first yoke 7 and the second yoke 8 by the magnetic force generated by the magnet 6 when the operation lever 2 is not operated.

The third movable member 10 may be provided with a magnetic body (the third magnetic body) such as iron only on a lower surface of the front end portion (a portion corresponding to the third attraction surfaces 73 and 83). In this case, the third movable member 10 may be formed by insertion molding in which a magnetic body (the third magnetic body) of a corresponding size is inserted into a non-magnetic body such as a thermoforming resin.

The fourth movable member 11 is a plate-like member configured to tilt in conjunction with the operation lever 2 while the operation lever 2 is tilted in a fourth zone. The fourth movable member 11 is made of a magnetic body (a fourth magnetic body) such as iron. The fourth movable member 11 is disposed on a side opposite to the second movable member 5 with a magnet 6 being interposed therebetween. The fourth zone is a part of a zone in which the operation lever 2 is tiltable, and is included in the third zone. The fourth zone is narrower than the third zone. The fourth zone is a zone opposite to the second zone with the operation reference position being interposed therebetween.

The front end portion of the fourth movable member 11 is, as illustrated in FIGS. 10A and 10B, attracted to later-described respective fourth attraction surfaces 74 and 84 of the first yoke 7 and the second yoke 8 by the magnetic force generated by the magnet 6 when the operation lever 2 is not operated.

The fourth movable member 11 may be provided with a magnetic body (the fourth magnetic body) such as iron only on a lower surface of the front end portion (a portion corresponding to the fourth attraction surfaces 74 and 84) of the fourth movable member 11. In this case, the fourth movable member 11 may be formed by insertion molding in which a magnetic body (the fourth magnetic body) of a corresponding size is inserted into a non-magnetic body such as a thermoforming resin.

The first yoke 7 and the second yoke 8 illustrated in FIGS. 10A and 10B have a stepped shape having respective first attraction surfaces 71 and 81, respective second attraction surfaces 72 and 82, respective third attraction surfaces 73 and 83 for attracting the third movable member 10, and respective fourth attraction surfaces 74 and 84 for attracting the fourth movable member 11. The third attraction surfaces 73 and 83 are formed on a side opposite to the first attraction surfaces 71 and 81 with a magnet 6 being interposed therebetween. The fourth attraction surfaces 74 and 84 are formed on a side opposite the second attraction surfaces 72 and 82 with the magnet 6 being interposed therebetween.

The pressing member 9 illustrated in FIGS. 10A and 10B has a stepped shape having a first pressing surface 91, a second pressing surface 92, a third pressing surface 93 for pressing the third movable member 10, and a fourth pressing surface 94 for pressing the fourth movable member 11. The third pressing surface 93 is formed on a side opposite to the first pressing surface 91 with the magnet 6 being interposed therebetween. The fourth pressing surface 94 is formed on a side opposite to the second pressing surface 92 with the magnet 6 being interposed therebetween.

According to the operation device 100 illustrated in FIGS. 10A and 10B, the first movable member 4 is attracted to the first attraction surfaces 71 and 81 while the operation lever 2 is tilted in an adjacent zone including the operation reference position with respect to the first zone. The first movable member 4 is pressed by the first pressing surface 91 while the operation lever 2 is tilted in the first zone. The first movable member 4 is tilted in conjunction with the operation lever 2. Operability of the operation lever 2 is generated upon the first movable member 4 separating from the first attraction surfaces 71 and 81.

The second movable member 5 is attracted to the second attraction surfaces 72 and 82 while the operation lever 2 is tilted in an adjacent zone including the operation reference position with respect to the second zone. The second movable member 5 is pressed by the second pressing surface 92 while the operation lever 2 is tilted in the second zone. The second movable member 5 is tilted in conjunction with the operation lever 2. Operability of the operation lever 2 is generated upon the second movable member 5 separating from the second attraction surfaces 72 and 82.

The third movable member 10 is attracted to the third attraction surfaces 73 and 83 while the operation lever 2 is tilted in an adjacent zone including the operation reference position with respect to the third zone. The third movable member 10 is pressed by the third pressing surface 93 while the operation lever 2 is tilted in the third zone. The third movable member 10 is tilted in conjunction with the operation lever 2. Operability of the operation lever 2 is generated upon the third movable member 10 separating from the third attraction surfaces 73 and 83.

The fourth movable member 11 is attracted to the fourth attraction surfaces 74 and 84 while the operation lever 2 is tilted in an adjacent zone including the operation reference position with respect to the fourth zone. The fourth movable member 11 is pressed by the fourth pressing surface 94 while the operation lever 2 is tilted in the fourth zone. The fourth movable member 11 is tilted in conjunction with the operation lever 2. Operability of the operation lever 2 is generated upon the fourth movable member 11 separating from the fourth attraction surfaces 74 and 84.

As described above, according to the present embodiment, a momentary type operation device 100 can be provided without having an actuator disposed at the base portion of the operation lever 2. Such an operation device 100 is capable of generating operability, and capable of two-step tilting rearward (the first direction) from the operation reference position, and capable of two-step tilting frontward (a second direction) from the operation reference position.

As described above, the operation device 100 that can be thinned and can exhibit small variability in the intensity of the operability may be easily produced in any of the first to third modifications.

### [Description of Symbols]

- 1:: housing
- 2:: operation lever
- 3:: support member
- 4:: first movable member (first magnetic body)
- 5:: second movable member (second magnetic body)
- 6:: magnet
- 7:: first yoke
- 8:: second yoke
- 9:: pressing member
- 10:: third movable member (third magnetic body)
- 11:: fourth movable member (fourth magnetic body)
- 100:: operation device

## Claims

1. An operation device (100) comprising:
an operation lever (2) configured to tilt in a first direction from an operation reference position;
a support member (3) configured to tiltably support the operational lever (2);
a first movable member (4) having a first magnetic body, the first movable member (4) being configured to tilt in conjunction with the operation lever (2) while the operation lever (2) is tilted in a first zone;
a second moveable member (5) having a second magnetic body, the second movable member (5) being configured to tilt in conjunction with the operation lever (2) while the operation lever (2) is tilted in a second zone, the second zone being included in the first zone;
a magnet (6) disposed so as to align magnetic poles in a direction perpendicular to a tilting direction of the operation lever (2);
a first yoke (7) facing a first magnetic pole (S) of the magnet (6); and
a second yoke (8) facing a second magnetic pole (N) of the magnet (6),
wherein the first yoke (7) and the second yoke (8) have respective first attraction surfaces (71, 81), the first attraction surfaces (71, 81) attracting the first magnetic body (4) by a magnetic force generated by the magnet (6) while the operation lever (2) is positioned at the operation reference position, and
wherein the first yoke (7) and the second yoke (8) have respective second attraction surfaces (72, 82), the second attraction surfaces (72, 82) attracting the second magnetic body (5) by a magnetic force generated by the magnet (6) while the operation lever (2) is tilted in an adjacent zone including the operation reference position before the operation lever (2) is tilted in the second zone.

2. The operation device (100) according to claim 1, wherein the second magnetic body (5) is disposed between the first magnetic body (4) and the magnet (6).

3. The operation device (100) according to claim 1 or 2 comprising:
a pressing member (9) disposed at a base portion of the operation lever (2), the pressing member (9) being configured to tilt integrally with the operation lever (2),
wherein the pressing member (9) has first pressing surfaces (91A, 91B) configured to press the first movable member (4) while the operation lever (2) is tilted in the first zone, and
the pressing member (9) has a second pressing surface (92) configured to press the second movable member (5) while the operation lever (2) is tilted in the second zone.

4. An operation device (100) according to any one of claims 1, 2, and 3,
wherein each of the first yoke (7) and the second yoke (8) has a stepped shape, in which the first attraction surfaces (71, 81) and the second attraction surfaces (72, 82) are disposed at different positions in a direction of attracting the first magnetic body (4) and the second magnetic body (5), and the first attraction surfaces (71, 81) and the second attraction surfaces (72, 82) are disposed at different positions in a direction perpendicular to the direction of attracting the first magnetic body (4) and the second magnetic body (5).

5. The operation device (100) according to any one of claims 1 to 4 further comprising:
a third movable member (10) having a third magnetic body, the third movable member (10) being configured to tilt in conjunction with the operation lever (2) while the operation lever (2) is tilted in a third zone, the third zone being opposite to the first zone with the operation reference position being interposed between the first zone and the third zone.

## Patentansprüche

1. Bedienungsvorrichtung (100), umfassend:
einen Bedienhebel (2), der dazu eingerichtet ist von einer Bedienreferenzposition aus in eine erste Richtung zu verkippen;
ein Lagerelement (3), das dazu eingerichtet ist, den Bedienhebel (2) verkippbar zu lagern;
ein erstes bewegliches Element (4) mit einem ersten magnetischen Körper, wobei das erste bewegliche Element (4) dazu eingerichtet ist, zusammen mit dem Bedienhebel (2) zu verkippen, während der Bedienhebel (2) in einer ersten Zone verkippt ist;
ein zweites bewegliches Element (5) mit einem zweiten magnetischen Körper, wobei das zweite bewegliche Element (5) dazu eingerichtet ist, zusammen mit dem Bedienhebel (2) zu verkippen, während der Bedienhebel (2) in einer zweiten Zone verkippt ist, wobei die zweite Zone in der ersten Zone enthalten ist;
einen Magneten (6), der angeordnet ist, um magnetische Pole in einer Richtung senkrecht zu einer Verkipprichtung des Bedienhebels (2) auszurichten;
ein erstes Joch (7), das einem ersten magnetischen Pol (S) des Magneten (6) zugewandt ist; und
ein zweites Joch (8), das einem zweiten magnetischen Pol (N) des Magneten (6) zugewandt ist,
wobei das erste Joch (7) und das zweite Joch (8) entsprechende erste Anziehungsflächen (71, 81) aufweisen, wobei die ersten Anziehungsflächen (71, 81) den ersten magnetischen Körper (4) durch eine von dem Magneten (6) erzeugte magnetische Kraft anziehen, während der Bedienhebel (2) in der Bedienreferenzposition angeordnet ist, und
wobei das erste Joch (7) und das zweite Joch (8) entsprechend zweite Anziehungsflächen (72, 82) aufweisen, wobei die zweiten Anziehungsflächen (72, 82) den zweiten magnetischen Körper (5) durch eine vom dem Magneten (6) erzeugte magnetische Kraft anziehen, während der Bedienhebel (2) in einer benachbarten Zone, die die Bedienreferenzposition beinhaltet, verkippt ist, bevor der Bedienhebel (2) in der zweiten Zone verkippt ist.

2. Bedienungsvorrichtung (100) gemäß Anspruch 1, wobei der zweite magnetische Körper (5) zwischen dem ersten magnetischen Körper (4) und den Magneten (6) angeordnet ist.

3. Bedienungsvorrichtung (100) gemäß Anspruch 1 oder2, umfassend:
ein Druckelement (9), das an einem Basisabschnitt des Bedienhebels (2) angeordnet ist, wobei das Druckelement (9) dazu eingerichtet ist, zusammen mit dem Bedienhebel (2) zu verkippen,
wobei das Druckelement (9) erste Druckflächen (91A, 91B) aufweist, die dazu eingerichtet sind das erste bewegliche Element (4) zu drücken, während der Bedienhebel (2) in der ersten Zone verkippt ist, und
das Druckelement (9) zweite Druckflächen (92) aufweist, die dazu eingerichtet sind das zweite bewegliche Element (5) zu drücken, während der Bedienhebel (2) in der zweiten Zone verkippt ist.

4. Bedienungsvorrichtung (100) gemäß einem der Ansprüche 1, 2 und 3, wobei sowohl das erste Joch (7) als auch das zweite Joch (8) eine gestufte Form aufweisen, in der die ersten Anziehungsflächen (71, 81) und die zweiten Anziehungsflächen (72, 82) in einer Anziehungsrichtung des ersten Magnetkörpers (4) und des zweiten Magnetkörpers (5) an unterschiedlichen Positionen angeordnet sind, und die erste Anziehungsflächen (71, 81) und die zweiten Anziehungsflächen (72, 82) in einer Richtung senkrecht zu der Anziehungsrichtung des ersten Magnetkörpers (4) und des zweiten Magnetkörpers (5) an unterschiedlichen Positionen angeordnet sind.

5. Bedienungsvorrichtung (100) gemäß einem der Ansprüche 1 bis 4, ferner umfassend:
ein drittes bewegliches Element (10) mit einem dritten Magnetkörper, wobei das dritte bewegliche Element (10) dazu eingerichtet ist zusammen mit dem Bedienhebel (2) zu verkippen, während der Bedienhebel (2) in einer dritten Zone verkippt ist, wobei die dritte Zone gegenüberliegend zu ersten Zone mit der Betriebsreferenzposition, wobei die dritte Zone gegenüber der ersten Zone mit der Betriebsreferenzposition zwischen der ersten Zone und der dritten Zone angeordnet ist.

## Revendications

1. Dispositif d'actionnement (100) comprenant :
un levier d'actionnement (2) configuré pour s'incliner dans une première direction depuis une position de référence d'actionnement ;
un organe de support (3) configuré pour supporter en inclinaison le levier opérationnel (2) ;
un premier organe mobile (4) ayant un premier corps magnétique, le premier organe mobile (4) étant configuré pour s'incliner conjointement avec le levier d'actionnement (2) tandis que le levier d'actionnement (2) est incliné dans une première zone ;
un deuxième organe mobile (5) ayant un deuxième corps magnétique, le deuxième organe mobile (5) étant configuré pour s'incliner conjointement avec le levier d'actionnement (2) tandis que le levier d'actionnement (2) est incliné dans une deuxième zone, la deuxième zone étant incluse dans la première zone ;
un aimant (6) disposé de façon à aligner des pôles magnétiques dans une direction perpendiculaire à une direction d'inclinaison du levier d'actionnement (2) ;
une première culasse (7) en regard d'un premier pôle magnétique (S) de l'aimant (6) ; et
une seconde culasse (8) en regard d'un second pôle magnétique (N) de l'aimant (6),
dans lequel la première culasse (7) et la seconde culasse (8) ont des premières surfaces d'attraction (71, 81) respectives, les premières surfaces d'attraction (71, 81) attirant le premier corps magnétique (4) par une force magnétique générée par l'aimant (6) tandis que le levier d'actionnement (2) est positionné à la position de référence d'actionnement, et
dans lequel la première culasse (7) et la seconde culasse (8) ont des secondes surfaces d'attraction (72, 82) respectives, les secondes surfaces d'attraction (72, 82) attirant le deuxième corps magnétique (5) par une force magnétique générée par l'aimant (6) tandis que le levier d'actionnement (2) est incliné dans une zone adjacente incluant la position de référence d'actionnement avant que le levier d'actionnement (2) soit incliné dans la deuxième zone.

2. Dispositif d'actionnement (100) selon la revendication 1, dans lequel le deuxième corps magnétique (5) est disposé entre le premier corps magnétique (4) et l'aimant (6).

3. Dispositif d'actionnement (100) selon la revendication 1 ou 2, comprenant :
un organe de pression (9) disposé au niveau d'une portion de base du levier d'actionnement (2), l'organe de pression (9) étant configuré pour s'incliner d'un seul tenant avec le levier d'actionnement (2),
dans lequel l'organe de pression (9) a des premières surfaces de pression (91A, 91B) configurées pour presser le premier organe mobile (4) tandis que le levier d'actionnement (2) est incliné dans la première zone, et
l'organe de pression (9) a une seconde surface de pression (92) configurée pour presser le deuxième organe mobile (5) tandis que le levier d'actionnement (2) est incliné dans la deuxième zone.

4. Dispositif d'actionnement (100) selon l'une quelconque des revendications 1, 2 et 3,
dans lequel chacune de la première culasse (7) et de la seconde culasse (8) a une forme étagée, dans laquelle les premières surfaces d'attraction (71, 81) et les secondes surfaces d'attraction (72, 82) sont disposées à des positions différentes dans une direction d'attraction du premier corps magnétique (4) et du deuxième corps magnétique (5), et les premières surfaces d'attraction (71, 81) et les secondes surfaces d'attraction (72, 82) sont disposées à des positions différentes dans une direction perpendiculaire à la direction d'attraction du premier corps magnétique (4) et du deuxième corps magnétique (5).

5. Dispositif d'actionnement (100) selon l'une quelconque des revendications 1 à 4 comprenant en outre :
un troisième organe mobile (10) ayant un troisième corps magnétique, le troisième organe mobile (10) étant configuré pour s'incliner conjointement avec le levier d'actionnement (2) tandis que le levier d'actionnement (2) est incliné dans une troisième zone, la troisième zone étant opposée à la première zone, la position de référence d'actionnement étant interposée entre la première zone et la troisième zone.
